# EUROPEAN PATENT APPLICATION

(11) **EP 4 667 890 A1**
(43) Date of publication of application: **24.12.2025**
(21) Application number: 25182334.0
(22) Date of filing: 12.06.2025
(51) Int. Cl.: G01M 5/00, G01M 11/08, G01B 11/16

(54) **COMPOSITE JOINT INSPECTION**

(30) Priority: 21.06.2024 US 202418750630
(71) Applicant: The Boeing Company, Arlington, VA 22202 (US)
(72) Inventor: Chowdhury, Nayeem Tawqir, Arlington, 22202 (US)
(74) Representative: Arnold & Siedsma

(57) **Abstract**

A composite joint inspection system and methods of use and forming are presented. A composite joint inspection system comprises a cavity formed by at least two composite components; a composite filler within the cavity; and a fiber optic cable running through the cavity extending out from at least one of a first end of the cavity or a second end of the cavity. The fiber optic cable is in contact with the composite filler.

## Description

### BACKGROUND INFORMATION

### 1. Field:

The present disclosure relates generally to non-destructive inspection and more specifically to inspection of composite joints.

### 2. Background:

Composite structures may be fabricated by joining two or more members together. In some cases, there may be one or more gaps in areas of joints between the members that may reduce the strength of the joints. In order to strengthen the joints, the gaps are filled with fillers, sometimes also referred to as radius fillers, composite fillers, fillets, or noodles.

Some composite airframe components, such as skin-stringer and web-flange attachment of beams and channels, comprise these structural elements which are referred as "noodles". Noodles or radius fillers are used to fill-out the radius bend of curved composite laminate structures. Noodles are constructed from composites with orientations different from the primary laminated structure. Noodles are located in areas that might be undesirably difficult or inconsistent to inspect by typical nondestructive methods. Typical nondestructive inspection using ultrasonic waves is costly, time consuming and inconsistent for inspection of curvatures and noodles due to complex geometry and location.

Therefore, it would be desirable to have a method and apparatus that takes into account at least some of the issues discussed above, as well as other possible issues. It would be desirable to develop a technique for nondestructively inspecting a noodle area inside a curved composite laminate structure.

### SUMMARY

An example of the present disclosure provides a composite joint inspection system. The composite joint inspection system comprises a cavity formed by at least two composite components; a composite filler within the cavity; and a fiber optic cable running through the cavity extending out from at least one of a first end of the cavity or a second end of the cavity, the fiber optic cable in contact with the composite filler.

The fiber optic cable may be embedded within the composite filler.

The fiber optic cable may be in contact with one of the at least two composite components and an outside surface of the composite filler.

The composite joint inspection system may further comprise a second fiber optic cable running through the cavity extending out from at least one of the first end of the cavity or the second end of the cavity, the second fiber optic cable positioned within the composite filler.

The composite joint inspection system may further comprise a light emitter connected to the fiber optic cable. Preferably, the system further comprises a data acquisition system connected to the fiber optic cable.

An example of the present disclosure provides an aircraft. The aircraft comprises a composite joint with an integrated strain detector. The integrated strain detector comprises a first composite component; a second composite component; a composite filler positioned in a cavity between the first composite component and the second composite component; and a fiber optic cable running through the cavity extending out from at least one of a first end of the cavity or a second end of the cavity, the fiber optic cable in contact with the composite filler. The cavity between the first composite component and the second composite component, the composite filler, and the fiber optic cable may be collectively referred to as a composite joint inspection system, preferably a composite joint inspection system according to any of the above examples.

The fiber optic cable may be embedded within the composite filler.

The fiber optic cable may be in contact with the first composite component and a surface of the composite filler.

The aircraft may further comprise a second fiber optic cable running through the cavity extending out from at least one of the first end of the cavity or the second end of the cavity, the second fiber optic cable positioned within the composite filler.

The aircraft may further comprise a light emitter connected to a first end of the fiber optic cable. Preferably, the aircraft further comprises a data acquisition system connected to a second end of the fiber optic cable.

An example of the present disclosure provides a method of inspecting a composite joint. A light wave is sent through a fiber optic cable running through a cavity of the composite joint, the optic cable extending out from at least one of a first end of the cavity or a second end of the cavity, the fiber optic cable in contact with a composite filler in the cavity. A reflectivity index of the light received from the fiber optic cable is measured. It is determined whether strain has impacted the composite joint based on the reflectivity index. Preferably, the measured reflectivity index is compared to a baseline reading.

The method may further comprise determining whether strain has impacted the composite joint based on the comparing the measured reflectivity index to the baseline reading.

The method may further comprise attaching a light emitter to the fiber optic cable; and attaching a data acquisition system to the fiber optic cable.

The method may further comprise placing the composite filler into the cavity between at least two composite components; and placing the fiber optic cable into the cavity such that the fiber optic cable is in contact with the composite filler. Preferably, the method further comprises resin infusing the composite filler and the at least two composite components to form the composite joint with integrated strain detector.

An example of the present disclosure provides a method of forming a composite joint. A composite filler is placed into a cavity between at least two composite components. A fiber optic cable is placed into the cavity such that the fiber optic cable is in contact with the composite filler. The composite filler and the at least two composite components are resin infused to form the composite joint with integrated strain detector.

The method may further comprise extruding the fiber optic cable in the fiber optic cable, wherein placing the fiber optic cable into the cavity is performed by placing the composite filler into the cavity.

Placing the fiber optic cable into the cavity may comprise placing the fiber optic cable in contact with a first composite component of the at least two composite components, and placing the composite filler into the cavity may comprise placing the composite filler into contact with the fiber optic cable.

The method may further comprise attaching a light emitter to the fiber optic cable; and attaching a data acquisition system to the fiber optic cable.

Another example of the present disclosure provides a composite joint inspection system. The composite joint inspection system comprises at least two composite components bonded together at a composite joint, a composite filler within the composite joint, preferably within a cavity formed by the at least two composite components, and a fiber optic cable embedded between layers of a composite component of the at least two composite components. The fiber optic cable runs along the joint, preferably running through the cavity, and extends out at least one of a first end of the composite component (or preferably the cavity) or a second end of the composite component (or preferably the cavity).

The system may further comprise a second fiber optic cable embedded within the composite filler.

The fiber optic cable may be embedded within ten composite plies of the composite joint.

The system may further comprise a second fiber optic cable embedded between layers of a second composite component of the at least two composite components, the second fiber optic cable running along the composite joint and extending out at least one of a first end of the second composite component or a second end of the second composite component.

Yet another example of the present disclosure provides a method of inspecting a composite structure. A light wave is sent through a fiber optic cable running through a composite structure, the fiber optic cable extending out from at least one of a first end of the composite structure (or the cavity) or a second end of the composite structure (or the cavity), the fiber optic cable in contact with the composite structure, preferably the composite filler in the cavity. A reflectivity index of the light received from the fiber optic cable is measured. The measured reflectivity index is compared to a baseline reading.

The method may further comprise determining whether strain has impacted the composite structure based on the comparing the measured reflectivity index to the baseline reading.

The method may further comprise attaching a light emitter to the fiber optic cable; and attaching a data acquisition system to the fiber optic cable.

The method may further comprise embedding the fiber optic cable in a composite component of the composite structure within ten plies of a composite joint of the composite structure.

The method may further comprise resin infusing the composite structure to form the composite structure with integrated strain detector.

The features and functions can be achieved independently in various example s of the present disclosure or may be combined in yet other example s in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a composite joint inspection system in accordance with an illustrative example;
**Figure 4** is a flowchart of a method of inspecting a composite joint in accordance with an illustrative example;
**Figure 5** is a flowchart of a method of forming a composite joint in accordance with an illustrative example;
**Figure 6** is a flowchart of a method of inspecting a composite structure in accordance with an illustrative example;
**Figure 7** is an illustration of an aircraft manufacturing and service method in a form of a block diagram in accordance with an illustrative example; and
**Figure 8** is an illustration of an aircraft in a form of a block diagram in which an illustrative example may be implemented.

### DETAILED DESCRIPTION

The illustrative examples recognize and take into account one or more considerations. The illustrative examples recognize and take into account that inconsistent results are obtained when inspecting the noodle of integrated structures using conventional non-destructive inspection techniques.

The illustrative examples recognize and take into account that current non-destructive inspection practices include the use of a sweeping ultrasonic probe that is shaped to the same radius as the integrated joint radius. The illustrative examples recognize and take into account that noodles do not have parallel front and back faces. The illustrative examples recognize and take into account that noodles are triangular in cross-section when simplified. The illustrative examples recognize and take into account that due to the non-parallel shape, the reflected and attenuated wave signals are not strongly detected, which can lead to inconsistent results.

The illustrative examples recognize and take into account that there is an access limitation as a physical probe is swept along the regions to be inspected. The illustrative examples recognize and take into account that for conventional ultrasonic inspection, the probe shape is customized to fit the radius of the scanning surface. The illustrative examples recognize and take into account that different probes will be used for different radiuses. The illustrative examples recognize and take into account that multiple probes will be used for swept radius surfaces where the dimension keeps changing. The illustrative examples recognize and take into account that for swept radius surfaces there is no probe shape that is an exact fit.

The illustrative examples recognize and take into account that some composite Noodles use 'chopped fibers' which significantly worsen the signal being reflected by the ultrasonic probe. The illustrative examples recognize and take into account that chopped fibers can make ultrasonic inspection incapable of successfully inspecting these new integrated structures.

The illustrative examples recognize and take into account that other non-destructive inspection (NDI) techniques include X-ray CT and acoustic emissions. The illustrative examples recognize and take into account that for X-ray CT, the scanning equipment is expensive and too bulky for the intended area of use for composite noodles. The illustrative examples recognize and take into account that acoustic Emissions (e.g., PZTs) rely on detecting reflected waves. The illustrative examples recognize and take into account that acoustic Emissions (e.g., PZTs) will also be susceptible to poor signal collection for the reasons discussed above.

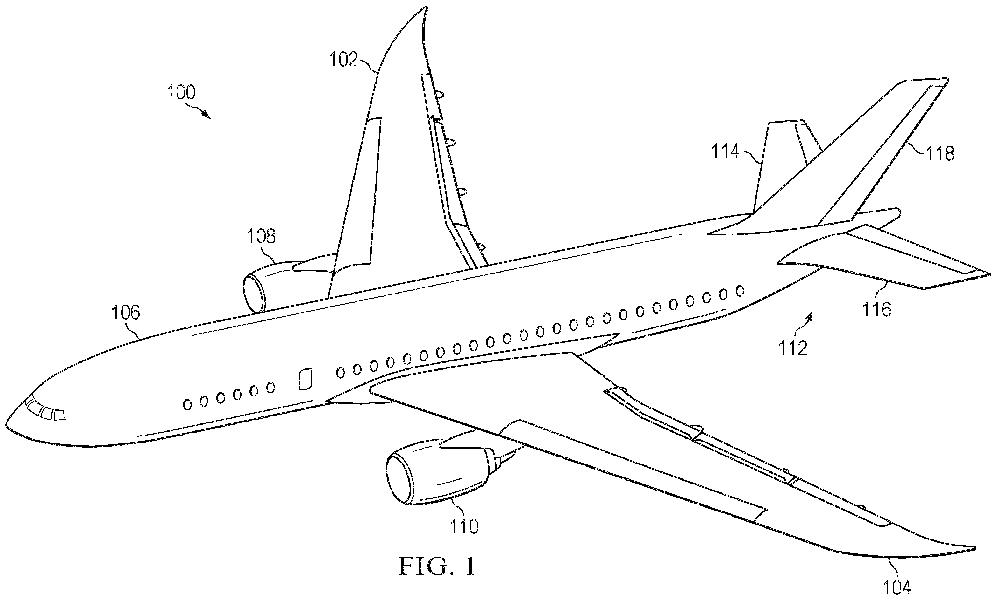

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite joints to be inspected using methods of the illustrative examples. Aircraft **100** is an example of an aircraft that can have composite joints formed using methods of the illustrative examples. Composite joints of the illustrative examples can be present in aircraft **100.**

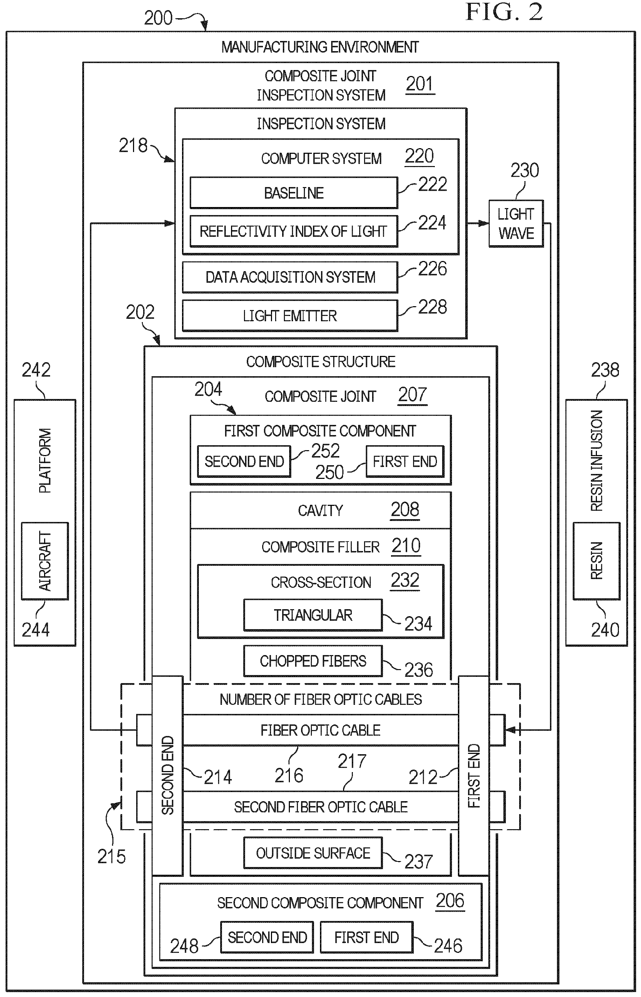

Turning now to **Figure 2****,** an illustration of a block diagram of a manufacturing environment is depicted in accordance with an illustrative example. Composite joint inspection system **201** can be used in aircraft **100** of Figure **1****.** Composite joint inspection system **201** can be formed in manufacturing environment **200.** Composite joint inspection system **201** can be utilized outside of manufacturing environment **200** to inspect composite joint **207.**

Composite joint **207** is a component of platform **242.** Platform **242** can take a number of different forms. For example, platform **242** can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a tanker aircraft, a surface ship, a tank, a personnel carrier, a train, a spacecraft, a space station, a satellite, a submarine, an automobile, a power plant, a bridge, a dam, a house, a manufacturing facility, a building, a robot, a robotic arm, a crane, and other suitable types of platforms. In some illustrative examples, platform **242** can be aircraft **244.**

Composite joint inspection system **201** comprises cavity **208** formed by at least two composite components, composite filler **210** within cavity **208,** and fiber optic cable **216** running through cavity **208** extending out from at least one of first end **212** of cavity **208** or second end **214** of the cavity. Fiber optic cable **216** is in contact with composite filler **210.** In this illustrative example, the at least two composite components comprises first composite component **204** and second composite component **206.**

In some illustrative examples, fiber optic cable **216** is embedded within composite filler **210.** In some of these illustrative examples, composite filler **210** is laid up with fiber optic cable **216** within the layup. In some of these illustrative examples, composite filler **210** is extruded with fiber optic cable **216** within composite filler **210.**

In some illustrative examples, fiber optic cable **216** is in contact with one of the at least two composite components and an outside surface of composite filler **210.** In some illustrative examples, fiber optic cable **216** is in contact with first composite component **204** and outside surface **237** of composite filler **210.** In some illustrative examples, fiber optic cable **216** is in contact with second composite component **206** and outside surface **237** of composite filler **210.**

Fiber optic cable **216** is one of number of fiber optic cables **215.** Number of fiber optic cables **215** comprises one or more fiber optic cables in contact with composite filler **210.** In some illustrative examples, number of fiber optic cables **215** comprises multiple fiber optic cables distributed throughout composite filler **210.** In some illustrative examples, number of fiber optic cables **215** comprises more than one fiber optic cable spread out throughout cross section **232** of composite filler **210.** Spreading more than one fiber optic cable throughout cross-section **232** of composite filler **210** allows for detecting strain in various cross-sectional locations including the interface between composite filler**210** and at least one of the composite components, first composite component **204** and second composite component **206.**

In some illustrative examples, composite joint inspection system **201** comprises second fiber optic cable **217** running through cavity **208** extending out from at least one of first end **212** of cavity **208** or second end **214** of cavity **208.** Second fiber optic cable **217** is positioned within composite filler **210.**

In this illustrative example, inspection system **218** is connected to fiber optic cable **216** to inspect composite filler **210.** In some illustrative examples, inspection system **218** can be temporarily connected to fiber optic cable **216** to inspect composite filler **210** during a set time, such as during manufacturing or maintenance. In some illustrative examples, inspection system **218** can be continuously connected to fiber optic cable **216** to inspect composite filler **210** during operation of platform **242.**

Inspection system **218** comprises data acquisition system **226** and light emitter **228.** Light emitter is configured to send light wave **230** into fiber optic cable **216.** In some illustrative examples, composite joint inspection system **201** further comprises light emitter **228** connected to fiber optic cable **216.**

Data acquisition system **226** is configured to receive responses from fiber optic cable **216.** Data acquisition system **226** can also be referred to as a detector. In some illustrative examples, composite joint inspection system **201** further comprises data acquisition system **226** connected to the fiber optic cable.

In some illustrative examples, light emitter **228** and the detector can be on the same end of fiber optic cable **216.** In some illustrative examples, both light emitter **228** and the detector can be on both ends of fiber optic cable **216.** In some illustrative examples of inspection system **218,** light from both ends can be emitted so that a location for strain changes can be outputted.

To inspect composite joint **207,** light wave **230** is sent through fiber optic cable **216** running through cavity **208** of composite joint **207.** In some illustrative examples, fiber optic cable **216** extends out from first end **212** of cavity **208** to second end **214** of cavity **208.** Fiber optic cable **216** is in contact with composite filler **210** in cavity **208.**

Reflectivity index **224** of the light received from fiber optic cable **216** is measured. In some illustrative examples, it is determined whether strain has impacted composite joint **207** based on reflectivity index **224.**

In some illustrative examples, it is determined whether reflectivity index **224** has a change from baseline **222.** In some illustrative examples, reflectivity index **224** and baseline **222** are compared by computer system **220.** In some illustrative examples, reflectivity index **224** is analyzed by a joint data analyzer.

In some illustrative examples, a joint data analyzer can be located in computer system **220** and can be implemented in software, hardware, firmware, or a combination thereof. When software is used, the operations performed by the joint data analyzer can be implemented in program instructions configured to run on hardware, such as a processor unit. When firmware is used, the operations performed by the joint data analyzer can be implemented in program instructions and data stored in persistent memory to run on a processor unit. When hardware is employed, the hardware can include circuits that operate to perform the operations in the joint data analyzer.

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices.

Computer system **220** is a physical hardware system and includes one or more data processing systems. When more than one data processing system is present in the computer system, those data processing systems are in communication with each other using a communications medium. The communications medium can be a network. The data processing systems can be selected from at least one of a computer, a server computer, a tablet computer, or some other suitable data processing system.

Computer system **220** can include a number of processor units that are capable of executing program instructions implementing processes for the joint data analyzer in the illustrative examples. In other words, the program instructions are computer-readable program instructions.

In some illustrative examples, Brillouin optical time-domain analysis can be utilized to determine whether an inconsistency is present in composite filler **210.** Acoustic waves are generated by injecting two counter-propagating light waves, such as light wave **230,** with a frequency difference equal to the Brillouin shift. If one of the beams is a short light pulse and its position is determined by time of flight, local variations of strain can be measured along fiber optic cable **216.**

In some illustrative examples, composite joint **207** is part of aircraft **244.** In some illustrative examples, aircraft **244** comprises composite joint **207** with an integrated strain detector. Composite joint **207** with the integrated strain detector comprises first composite component **204,** second composite component **206,** and composite filler **210** positioned in cavity **208** between first composite component **204** and second composite component **206.** Composite joint further comprises fiber optic cable **216** running through cavity **208** and extending out from at least one of first end **212** of cavity **208** or second end **214** of cavity **208.** Fiber optic cable **216** is in contact with composite filler **210.**

In some illustrative examples, cross-section **232** of composite filler **210** is triangular **234.** Composite joint inspection system **201** provides accurate inspections of composite filler **210** with triangular **234** cross-section **232.** Conventional ultrasound inspection techniques are at least one of too difficult, too time-consuming, or inconsistent for inspecting triangular **234** cross-section **232.**

In some illustrative examples, composite filler **210** comprises chopped fibers **236.** Composite joint inspection system **201** provides accurate inspections of composite filler **210** with chopped fibers **236.** Chopped fibers **236** reduce the signal being reflected by the ultrasonic probe, making conventional ultrasonic inspection undesirably difficult or inconsistent to perform on composite filler **210** with chopped fibers **236.**

In some illustrative examples, at least one of fiber optic cable **216** or second fiber optic cable **217** can be present in one composite component of composite structure **202.** In some illustrative examples, fiber optic cable **216** can be present in first composite component **204.** In some illustrative examples, second fiber optic cable **217** can be present in second composite component **206.**

In some illustrative examples, composite joint inspection system **201** comprises at least two composite components bonded together at composite joint **207,** composite filler **210** within composite joint **207,** and fiber optic cable **216** embedded between layers of first composite component **204** of the at least two composite components. Fiber optic cable **216** runs along composite joint **207** and extending out at least one of first end **250** of first composite component **204** or second end **252** of first composite component **204.** In some illustrative examples, fiber optic cable **216** is embedded within ten composite plies of composite joint **207.**

In some illustrative examples, composite joint inspection system **201** further comprises second fiber optic cable **217** embedded within composite filler **210.**

In some illustrative examples, composite joint inspection system **201** further comprises second fiber optic cable **217** embedded between layers of second composite component **206** of the at least two composite components. In these illustrative examples, second fiber optic cable **217** runs along composite joint **207** and extends out at least one of first end **246** of second composite component **206** or second end **248** of second composite component **206.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, number of fiber optic cables **215** comprises more than two fiber optic cables. In some illustrative examples, multiple fiber optic cables can be placed throughout the cross section of cavity **208.** In some illustrative examples, adding multiple fiber optic cables can be beneficial for detecting inconsistencies at interfaces between composite filler **210** and composite components of composite structure **202.** As another example, cross-section **232** of composite filler **210** is a shape other than generally triangular.

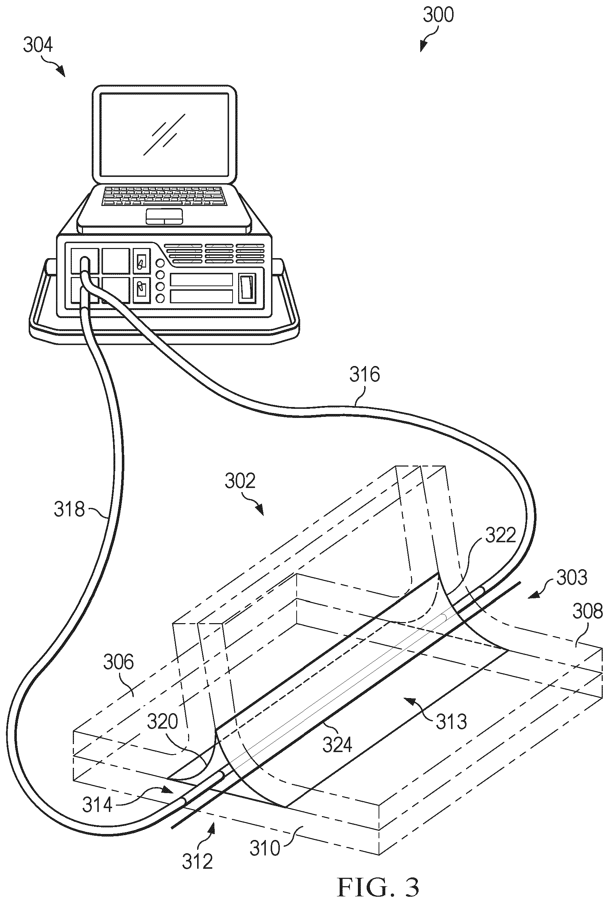

Turning now to **Figure 3****,** an illustration of a composite joint inspection system is depicted in accordance with an illustrative example. Composite joint inspection system **300** is a physical implementation of composite joint inspection system **201** of Figure **2****.**

In this illustrative example, composite structure **302** comprises first composite component **306,** second composite component **308,** and third composite component **310.** Cavity **312** is formed between first composite component **306,** second composite component **308,** and third composite component **310.** Composite filler **313** is present within cavity **312.**

Composite joint inspection system **300** comprises cavity **312** formed by at least two composite components, composite filler **313** within cavity **312,** and fiber optic cable **314** running through cavity **312** extending out from at least one of first end **320** of cavity **312** or second end **322** of cavity **312.** Fiber optic cable **314** is in contact with composite filler **313.** In this illustrative example, fiber optic cable **314** is embedded within composite filler **313.** In this illustrative example, fiber optic cable **314** is centered within composite filler **313.** In some illustrative examples, fiber optic cable **314** is embedded within composite filler **313** at a different location in the cross-section of composite filler **313.**

As depicted, composite joint inspection system **300** further comprises second fiber optic cable **324** running through cavity **312** extending out from at least one of first end **320** of cavity **312** or second end **322** of cavity **312.** Second fiber optic cable **324** is positioned within composite filler **313.**

In this illustrative example, second fiber optic cable **324** is in contact with one of the at least two composite components and an outside surface of composite filler **313.** In this illustrative example, second fiber optic cable **324** is in contact with second composite component **308** and an outside surface of composite filler **313.**

As depicted, inspection system **304** is connected to fiber optic cable **314.** Inspection system **304** is connected to fiber optic cable **314** by connector **316** and connector **318.** Inspection system **304** comprises a light emitter and a detector. The detector, or data acquisition system, is configured to receive signals from fiber optic cable **314.**

Inspection system **304** sends light waves into fiber optic cable **314.** To inspect composite joint **303,** a light wave is sent through fiber optic cable **314** running through cavity **312** of composite joint **303.** Fiber optic cable **314** extends out from a first end of cavity **312** to a second end of cavity **312.** Fiber optic cable **314** is in contact with composite filler **313** in cavity **312.**

A reflectivity index of the light received from the fiber optic cable is measured. It is determined whether strain has impacted the composite joint based on the reflectivity index. In some illustrative examples, determining whether strain has impacted the composite joint **303** comprises determining whether the reflectivity index has a change from a baseline. In some illustrative examples, inspection system **304** performs the determination as to whether the reflectivity index has changed from the baseline.

Although fiber optic cable **314** and second fiber optic cable **324** are depicted as within cavity **312,** in other illustrative examples at least one fiber optic cable is present in at least one of first composite component **306,** second composite component **308,** or third composite component **310.** In some illustrative examples, a fiber optic cable is present between layers of first composite component **306** along composite joint **303.** In some illustrative examples, a fiber optic cable is present between layers of first composite component **306** parallel to cavity **312.** In some illustrative examples, a fiber optic cable is present between layers of second composite component **308** along composite joint **303.** In some illustrative examples, a fiber optic cable is present between layers of second composite component **308** parallel to cavity **312.** In some illustrative examples, a fiber optic cable is present between layers of third composite component **310** along composite joint **303.** In some illustrative examples, a fiber optic cable is present between layers of third composite component **310** parallel to cavity **312.**

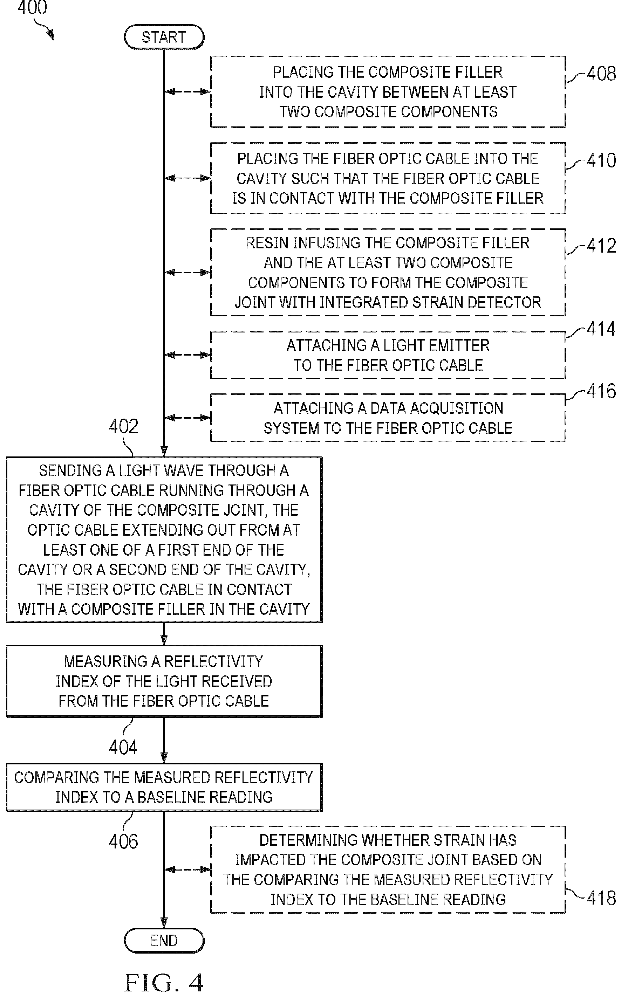

Turning now to **Figure 4****,** a flowchart of a method of inspecting a composite joint is depicted in accordance with an illustrative example. Method **400** can be used to inspect a composite joint of aircraft **100** of Figure **1****.** Method **400** can be used to inspect composite joint **207** of Figure **2****.** Method **400** can be performed using composite joint inspection system **201** of Figure **2****.** Method **400** can be performed to inspect composite joint **303** of Figure **3****.** Method **400** can be performed using composite joint inspection system **300** of Figure **3****.**

Method **400** sends a light wave through a fiber optic cable running through a cavity of the composite joint, the optic cable extending out from at least one of a first end of the cavity or a second end of the cavity, the fiber optic cable in contact with a composite filler in the cavity (operation **402**). Method **400** measures a reflectivity index of the light received from the fiber optic cable (operation **404**). Method **400** compares the measured reflectivity index to a baseline reading (operation **406**). Afterwards, method **400** terminates.

In some illustrative examples, method **400** places the composite filler into the cavity between at least two composite components (operation **408**). In some illustrative examples, method **400** places the fiber optic cable into the cavity such that the fiber optic cable is in contact with the composite filler (operation **410**). In some illustrative examples, the fiber optic cable is placed into the cavity prior to placing the composite filler into the cavity. In some illustrative examples, the fiber optic cable is positioned within the composite filler. In these illustrative examples, placing the composite filler into the cavity simultaneously places the fiber optic cable into the cavity.

In some illustrative examples, method **400** resin infuses the composite filler and the at least two composite components to form the composite joint with integrated strain detector (operation **412**). In some illustrative examples, method **400** resin infuses the composite filler while the composite filler is in contact with the fiber optic cable.

In some illustrative examples, method **400** attaches a light emitter to the fiber optic cable (operation **414**). In some illustrative examples, method **400** attaches a data acquisition system to the fiber optic cable (operation **416**). In some illustrative examples, the light emitter and the data acquisition system are a part of an inspection system connected to the fiber optic cable.

In some illustrative examples, method 400 determines whether strain has impacted the composite joint based on the comparing the measured reflectivity index to the baseline reading (operation **418**). In some illustrative examples, the determination is made by an inspection system comprising the data acquisition system and the light emitter. In some other illustrative examples, the reflectivity index is provided to a computer system separate from the inspection system for analysis.

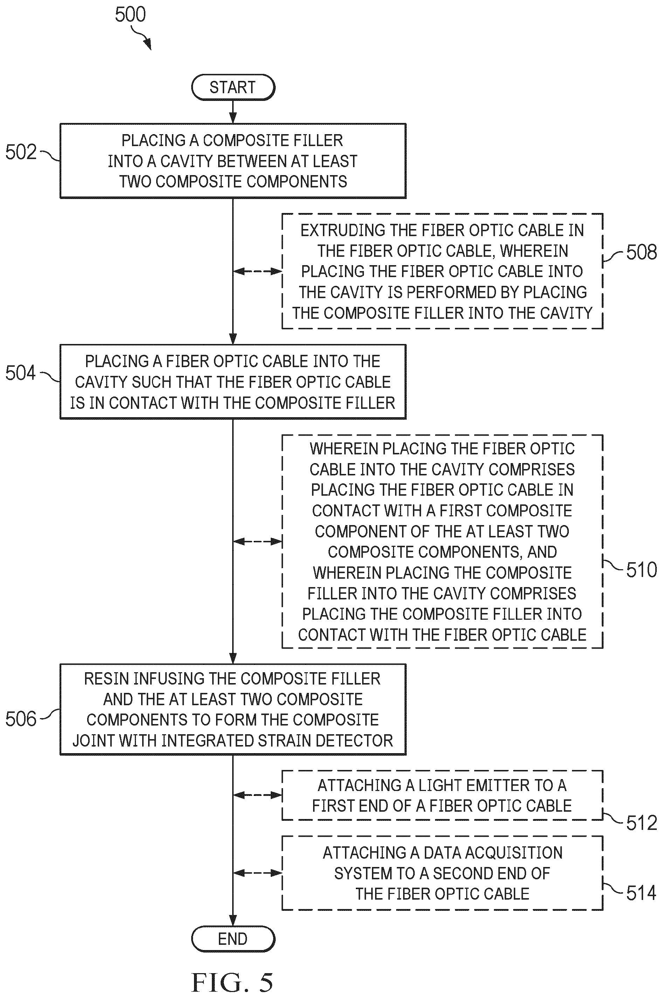

Turning now to **Figure 5****,** a flowchart of a method of forming a composite joint is depicted in accordance with an illustrative example. Method **500** can be performed to manufacture a component of aircraft **100** of Figure **1****.** Method **500** can be performed to manufacture composite joint **207** of Figure **2****.** Method **500** can be performed to manufacture composite joint **303** of Figure **3****.**

Method **500** places a composite filler into a cavity between at least two composite components (operation **502**). Method **500** places a fiber optic cable into the cavity such that the fiber optic cable is in contact with the composite filler (operation **504**). Method **500** resin infuses the composite filler and the at least two composite components to form the composite joint with integrated strain detector (operation **506**). Afterwards, method **500** terminates.

In some illustrative examples, method **500** extrudes the fiber optic cable in the fiber optic cable, wherein placing the fiber optic cable into the cavity is performed by placing the composite filler into the cavity (operation **508**). In some illustrative examples, placing the fiber optic cable into the cavity comprises placing the fiber optic cable in contact with a first composite component of the at least two composite components, and wherein placing the composite filler into the cavity comprises placing the composite filler into contact with the fiber optic cable (operation **510**).

In some illustrative examples, method **500** attaches a light emitter to the fiber optic cable (operation **512**). In some illustrative examples, method **500** attaches a data acquisition system to the fiber optic cable (operation **514**). In some illustrative examples, the light emitter and the data acquisition system are a part of an inspection system connected to the fiber optic cable.

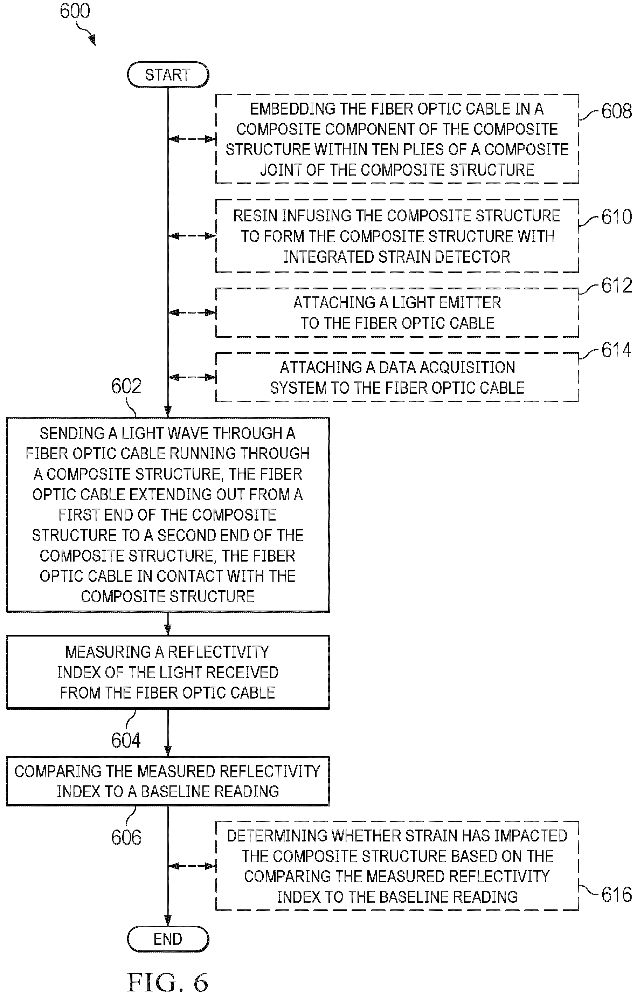

Turning now to **Figure 6****,** a flowchart of a method of inspecting a composite structure is depicted in accordance with an illustrative example. Method **600** can be used to inspect a composite structure of aircraft **100** of Figure **1****.** Method **600** can be used to inspect composite structure **202** of Figure **2****.** Method **600** can be performed to inspect composite structure **302** of Figure **3****.**

Method **600** sends a light wave through a fiber optic cable running through a composite structure, the fiber optic cable extending out from at least one of a first end of the composite structure or a second end of the composite structure, the fiber optic cable in contact with the composite structure (operation **602**). Method **600** measures a reflectivity index of the light received from the fiber optic cable (operation **604**)**.** Method **600** compares the measured reflectivity index to a baseline reading (operation **606**).

In some illustrative examples, method **600** embeds the fiber optic cable in a composite component of the composite structure within ten plies of a composite joint of the composite structure (operation **608).** In some illustrative examples, method **600** resin infuses the composite structure to form the composite structure with integrated strain detector (operation **610**).

In some illustrative examples, method **600** attaches a light emitter to the fiber optic cable (operation **612**). In some illustrative examples, method **600** attaches a data acquisition system to the fiber optic cable (operation **614**).

In some illustrative examples, method **600** determines whether strain has impacted the composite structure based on the comparing the measured reflectivity index to the baseline reading (operation **616).** In some illustrative examples, the determination is made by an inspection system comprising the data acquisition system and the light emitter. In some other illustrative examples, the reflectivity index is provided to a computer system separate from the inspection system for analysis.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **408** through operation **418** may be optional. As another example, operation **508** through operation **514** may be optional. As another example, operation **608** through operation **616** may be optional.

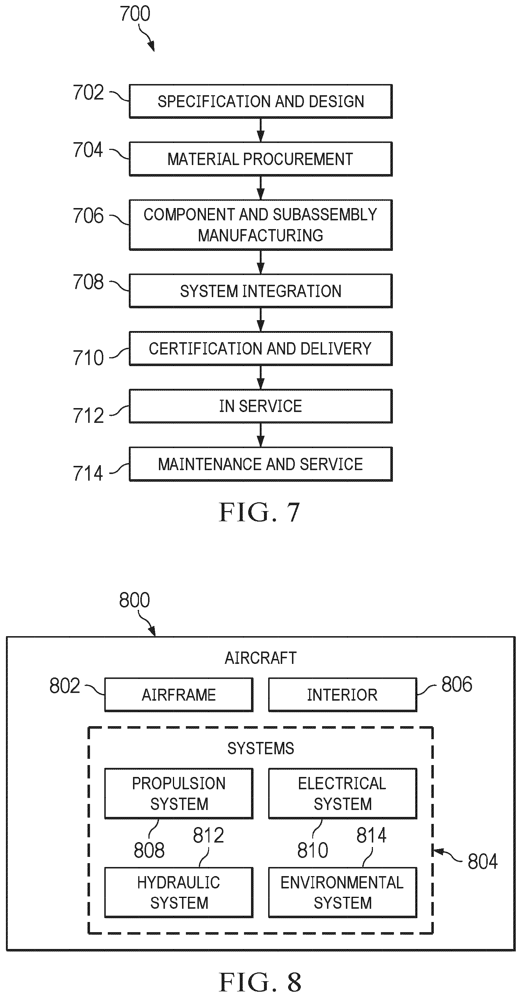

Illustrative examples of the present disclosure may be described in the context of aircraft manufacturing and service method **700** as shown in **Figure 7** and aircraft **800** as shown in **Figure 8****.** Turning first to **Figure 7****,** an illustration of an aircraft manufacturing and service method in a form of a block diagram is depicted in accordance with an illustrative example. During preproduction, aircraft manufacturing and service method **700** may include specification and design **702** of aircraft **800 in** **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative example may be implemented. In this example, aircraft **800** is produced by aircraft manufacturing and service method **700** of **Figure 7** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative examples may be manufactured or used during at least one of component and subassembly manufacturing **706,** system integration **708,** in service **712,** or maintenance and service **714** of **Figure 7****.**

The illustrative examples provide an inspection technique that is: a) non-destructive, b) compact, c) easy to install without additional design efforts, d) inexpensive, and e) independent of any wave emitting techniques through the composite material. In the illustrative examples, at least one fiber optic strand is either embedded or bonded along the span of the noodle. Inconsistencies in the noodle can then be determined by a change in the fiber optic cables signal. A change in signal received from the fiber optic cable is associated to inconsistencies or other changes in the noodle.

The illustrative examples provide a different method of detecting inconsistencies in the noodle compared to prior processes. The illustrative examples send a light wave through a fiber optic cable and measure the reflectivity index of light to then determine if there is a change from a 'baseline' reading. When a change is detected, the change indicates that the system has been strained and significantly high strain readings/ spikes or drops in the signal are an indication that an inconsistency has been created. In the illustrative examples, a fiber optic cable is integrated within the platform structure as a fly-away part as opposed relying solely on scanning equipment on the ground. By avoiding the use of inspection instruments that reflect/refract sonic waves in a non-homogenous material (i.e., the noodle), the inconsistent results can be avoided.

The illustrative examples use lights passing through at least one fiber optic cable for detection of inconsistencies in integrated noodles for resin infused aircraft parts. The illustrative examples detect inconsistencies in the noodle by detecting strain in the embedded fiber optic cable as opposed to directly detecting inconsistencies in the noodle itself. The illustrative examples do not require unique equipment or tools as the geometry of the noodle changes. The illustrative examples are a one-size fits all solution to inspection of composite noodles.

The illustrative examples provide an improved method for inspecting noodles in integrated structures. The illustrative examples can be used as both a passive and active form of inspection in composite joints. The illustrative examples can be used as both a passive and active form of inspection in aircraft structures.

The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure comprises the following clauses:
1. A composite joint inspection system:
   a cavity formed by at least two composite components;
   a composite filler within the cavity; and
   a fiber optic cable running through the cavity extending out from at least one of a first end of the cavity or a second end of the cavity, the fiber optic cable in contact with the composite filler.
2. The composite joint inspection system of clause 1, wherein the fiber optic cable is embedded within the composite filler.
3. The composite joint inspection system of clause 1 or 2, wherein the fiber optic cable is in contact with one of the at least two composite components and an outside surface of the composite filler.
4. The composite joint inspection system of any one of clauses 1-3, further comprising:
   a second fiber optic cable running through the cavity extending out from at least one of the first end of the cavity or the second end of the cavity, the second fiber optic cable positioned within the composite filler.
5. The composite joint inspection system of any one of clauses 1-4, further comprising:
   a light emitter connected to the fiber optic cable.
6. The composite joint inspection system of clause 5, further comprising:
   a data acquisition system connected to the fiber optic cable.
7. An aircraft comprising:
   a composite joint with an integrated strain detector comprising:
   a first composite component;
   a second composite component;
   a composite filler positioned in a cavity between the first composite component and the second composite component; and
   a fiber optic cable running through the cavity extending out from at least one of a first end of the cavity or a second end of the cavity, the fiber optic cable in contact with the composite filler.
8. The aircraft of clause 7, wherein the fiber optic cable is embedded within the composite filler.
9. The aircraft of clause 7 or 8, wherein the fiber optic cable is in contact with the first composite component and a surface of the composite filler.
10. The aircraft of any one of clauses 7-9, further comprising:
   a second fiber optic cable running through the cavity extending out from at least one of the first end of the cavity or the second end of the cavity, the second fiber optic cable positioned within the composite filler.
11. The aircraft of any one of clauses 7-10, further comprising:
   a light emitter connected to a first end of the fiber optic cable.
12. The aircraft of clause 11 further comprising:
   a data acquisition system connected to a second end of the fiber optic cable.
13. A method of inspecting a composite joint comprising:
   sending a light wave through a fiber optic cable running through a cavity of the composite joint, the fiber optic cable extending out from at least one of a first end of the cavity or a second end of the cavity, the fiber optic cable in contact with a composite filler in the cavity;
   measuring a reflectivity index of the light received from the fiber optic cable; and
   comparing the measured reflectivity index to a baseline reading.
14. The method of clause 13, further comprising:
   determining whether strain has impacted the composite joint based on the comparing the measured reflectivity index to the baseline reading.
15. The method of clause 13 or 14, further comprising:
   attaching a light emitter to the fiber optic cable; and
   attaching a data acquisition system to the fiber optic cable.
16. The method of any one of clauses 13-15, further comprising:
   placing the composite filler into the cavity between at least two composite components; and
   placing the fiber optic cable into the cavity such that the fiber optic cable is in contact with the composite filler.
17. The method of clause 16, further comprising:
   resin infusing the composite filler and the at least two composite components to form the composite joint with integrated strain detector.
18. A method of forming a composite joint comprising:
   placing a composite filler into a cavity between at least two composite components;
   placing a fiber optic cable into the cavity such that the fiber optic cable is in contact with the composite filler; and
   resin infusing the composite filler and the at least two composite components to form the composite joint with integrated strain detector.
19. The method of clause 18, further comprising:
   extruding the fiber optic cable in the fiber optic cable, wherein placing the fiber optic cable into the cavity is performed by placing the composite filler into the cavity.
20. The method of clause 18 or 19, wherein placing the fiber optic cable into the cavity comprises placing the fiber optic cable in contact with a first composite component of the at least two composite components, and wherein placing the composite filler into the cavity comprises placing the composite filler into contact with the fiber optic cable.
21. The method of any one of clauses 18-20, further comprising:
   attaching a light emitter to the fiber optic cable; and
   attaching a data acquisition system to the fiber optic cable.
22. A composite joint inspection system:
   at least two composite components bonded together at a composite joint;
   a composite filler within the composite joint; and
   a fiber optic cable embedded between layers of a composite component of the at least two composite components, the fiber optic cable running along the composite joint and extending out at least one of a first end of the composite component or a second end of the composite component.
23. The composite joint inspection system of clause 22, further comprising a second fiber optic cable embedded within the composite filler.
24. The composite joint inspection system of clause 22 or 23, wherein the fiber optic cable is embedded within ten composite plies of the composite joint.
25. The composite joint inspection system of any one of clauses 22-24, further comprising:
   a second fiber optic cable embedded between layers of a second composite component of the at least two composite components, the second fiber optic cable running along the composite joint and extending out at least one of a first end of the second composite component or a second end of the second composite component.
26. A method of inspecting a composite structure comprising:
   sending a light wave through a fiber optic cable running through a composite structure, the fiber optic cable extending out from at least one of a first end of the composite structure or a second end of the composite structure, the fiber optic cable in contact with the composite structure;
   measuring a reflectivity index of the light received from the fiber optic cable; and
   comparing the measured reflectivity index to a baseline reading.
27. The method of clause 26, further comprising:
   determining whether strain has impacted the composite structure based on the comparing the measured reflectivity index to the baseline reading.
28. The method of clause 26 or 27, further comprising:
   attaching a light emitter to the fiber optic cable; and
   attaching a data acquisition system to the fiber optic cable.
29. The method of any one of clauses 26-28, further comprising:
   embedding the fiber optic cable in a composite component of the composite structure within ten plies of a composite joint of the composite structure.
30. The method of any one of clauses 26-29, further comprising:
   resin infusing the composite structure to form the composite structure with integrated strain detector.

## Claims

1. A composite joint inspection system (218, 304):
a cavity (208, 312) formed by at least two composite components (204, 206, 306, 308);
a composite filler (210, 313) within the cavity (208, 312); and
a fiber optic cable (216, 314) running through the cavity (208, 312) extending out from at least one of a first end (212, 320) of the cavity (208, 312) to a second end (214, 322) of the cavity (208, 312), the fiber optic cable (216, 314) in contact with the composite filler (210, 313).

2. The composite joint inspection system (218, 304) of claim 1, wherein:
the fiber optic cable (216, 314) is embedded within the composite filler (210, 313); and/or
the fiber optic cable (216, 314) is in contact with one of the at least two composite components (204, 206, 306, 308) and an outside surface (237) of the composite filler (210, 313).

3. The composite joint inspection system (218, 304) of claim 1 or 2, further comprising:
a second fiber optic cable (217, 324) running through the cavity (208, 312) extending out from at least one first end (212, 320) of the cavity (208, 312) or the second end (214, 322) of the cavity (208, 312), the second fiber optic cable (217, 324)fiber optic cable (216, 314) positioned within the composite filler (210, 313); and/or
a light emitter (228) connected to the fiber optic cable (216, 314), and preferably further comprising a data acquisition system (226) connected to the fiber optic cable (216, 314).

4. An aircraft (100, 244, 700) comprising:
a composite joint (207, 303) with an integrated strain detector comprising:
a first composite component (204, 306);
a second composite component (206, 308);
a composite filler (210, 313) positioned in a cavity (208, 312) between the first composite component (204, 306) and the second composite component (206, 308); and
a fiber optic cable (216, 314) running through the cavity (208, 312) extending out from at least one of a first end (212, 320) of the cavity (208, 312) or a second end (214, 322) of the cavity (208, 312), the fiber optic cable (216, 314) in contact with the composite filler (210, 313).

5. The aircraft (100, 244, 700) of claim 4, wherein:
the fiber optic cable (216, 314) is embedded within the composite filler (210, 313); and/or
the fiber optic cable (216, 314) is in contact with the first composite component (204, 306) and a surface (237) of the composite filler (210, 313).

6. The aircraft (100, 244, 700) of claim 4 or 5, further comprising:
a second fiber optic cable (217, 324) running through the cavity (208, 312) extending out from at least one of the first end (212, 320) of the cavity (208, 312) to the second end (214, 322) of the cavity (208, 312), the second fiber optic cable (217, 324)fiber optic cable (216, 314) positioned within the composite filler (210, 313); and/or
a light emitter (228) connected to a first end (212, 320) of the fiber optic cable (216, 314), and preferably further comprising a data acquisition system (226) connected to a second end (214, 322) of the fiber optic cable (216, 314).

7. A method (400) of inspecting a composite joint (207, 303) comprising:
sending (402) a light wave (230) through a fiber optic cable (216, 314) running through a cavity (208, 312) of the composite joint (207, 303), the fiber optic cable (216, 314) extending out from at least one of a first end (212, 320) of the cavity (208, 312) or a second end (214, 322) of the cavity (208, 312), the fiber optic cable (216, 314) in contact with a composite filler (210, 313) in the cavity (208, 312);
measuring (404) a reflectivity index (224) of the light received from the fiber optic cable (216, 314); and
comparing (406) the measured reflectivity index (224) to a baseline (222) reading.

8. The method (400) of claim 7, further comprising:
determining (418) whether strain has impacted the composite joint (207, 303) based on the comparing the measured reflectivity index (224) to the baseline (222) reading; and/or
attaching (414) a light emitter (228) to the fiber optic cable (216, 314), and attaching (416) a data acquisition system (226) to the fiber optic cable (216, 314).

9. The method (400) of claim 7 or 8, further comprising:
placing (408) the composite filler (210, 313) into the cavity (208, 312) between at least two composite components (204, 206, 306, 308); and
placing (410) the fiber optic cable (216, 314) into the cavity (208, 312) such that the fiber optic cable (216, 314) is in contact with the composite filler (210, 313), and preferably further comprising:
resin infusing (412) the composite filler (210, 313) and the two composite components (204, 206, 306, 308) to form the composite joint (207, 303) with integrated strain detector.

10. A method (500) of forming a composite joint (207, 303) comprising:
placing (502) a composite filler (210, 313) into a cavity (208, 312) between at least two composite components (204, 206, 306, 308);
placing (504) a fiber optic cable (216, 314) into the cavity (208, 312) such that the fiber optic cable (216, 314) is in contact with the composite filler (210, 313); and
resin infusing (506) the composite filler (210, 313) and the at least two composite components (204, 206, 306, 308) to form the composite joint (207, 303) with integrated strain detector.

11. The method (500) of claim 10, further comprising:
extruding (508) the fiber optic cable (216, 314) in the fiber optic cable (216, 314), wherein placing the fiber optic cable (216, 314) into the cavity (208, 312) is performed by placing the composite filler (210, 313) into the cavity (208, 312); and/or
attaching (512) a light emitter (228) to the fiber optic cable (216, 314), and attaching (514) a data acquisition system (226) to the fiber optic cable (216, 314).

12. The method (500) of claim 10 or 11, wherein (510) placing the fiber optic cable (216, 314) into the cavity (208, 312) comprises placing the fiber optic cable (216, 314) in contact with a first composite component (204, 306) of the at least two composite components (204, 206, 306, 308), and wherein placing the composite filler (210, 313) into the cavity (208, 312) comprises placing the composite filler (210, 313) into contact with the fiber optic cable (216, 314).

13. A composite joint inspection system (218, 304):
at least two composite components (204, 206, 306, 308) bonded together at a composite joint (207, 303);
a composite filler (210, 313) within the composite joint (207, 303); and
a fiber optic cable (216) embedded between layers of a composite component (204) of the at least two composite components (204, 206, 306, 308), the fiber optic cable (216) running along the joint and extending out at least one of a first end (250) of the composite component (204) or a second end (252) of the composite component (204).

14. The composite joint inspection system (218, 304) of claim 13, wherein:
the system (218, 304) further comprises a second fiber optic cable (217) embedded within the composite filler (210, 313); and/or
the fiber optic cable (216) is embedded within ten composite plies of the composite joint (207, 303).

15. A method (600) of inspecting a composite structure (202, 302) comprising:
sending (602) a light wave through a fiber optic cable (216) running through a composite structure (202, 302), the fiber optic cable (216) extending out from at least one of a first end of the composite structure (202, 302) or a second end of the composite structure (202, 302), the fiber optic cable (216) in contact with the composite structure (202, 302);
measuring (604) a reflectivity index of the light (224) received from the fiber optic cable (216); and comparing (606) the measured reflectivity index (224) to a baseline (222) reading.
